# EUROPEAN PATENT APPLICATION

(11) **EP 1 860 832 A1**
(43) Date of publication of application: **28.11.2007**
(21) Application number: 06290856.1
(22) Date of filing: 24.05.2006
(51) Int. Cl.: H04L 12/56

(54) **UMA/GAN keep-alive mechanism in wireless communication networks**

(71) Applicant: MOTOROLA, INC., Schaumburg, IL 60196 (US)
(72) Inventor: Padovan, Fabrice, Colomiers 31770 (FR); Lefevre, Fabienne, Villeneuve Tolosane 31270 (FR); Daudin, Guillaume, Tolouse 31200 (FR)
(74) Representative: Delumeau, François Guy

(57) **Abstract**

A wireless communication user terminal (200), and methods therein, wherein the terminal sends a keep-alive message upon expiration of a keep-alive timer, for example, a TU 3906 timer (250). In one embodiment, the timer is reset upon transmission of certain messages before the timer expires. The keep-alive message is transmitted only upon expiration of the timer.

## Description

### FIELD OF THE DISCLOSURE

The present disclosure relates generally to wireless communications, and more particularly to keep-alive message signaling in mobile stations that communicate in Unlicensed Mobile Access Networks (UMA) and General Access Networks (GANs), corresponding entities and methods.

### BACKGROUND

The Unlicensed Mobile Access (UMA) and General Access Network (GAN) specifications define keep-alive mechanisms that perform different functions. Generally, the keep-alive mechanism informs the network when a mobile station (MS) has disconnected. This occurs when the network stops receiving periodic keep-alive messages from the MS. After the MS disconnects, the network can eventually release network resources previously linked to the MS and optimise the use of resources in GAN controller (GANC). In addition, when no other message is flowing on the link, the continual sending of periodic keep-alive messages by the MS permits maintaining Transmission Control Protocol (TCP) socket flow.

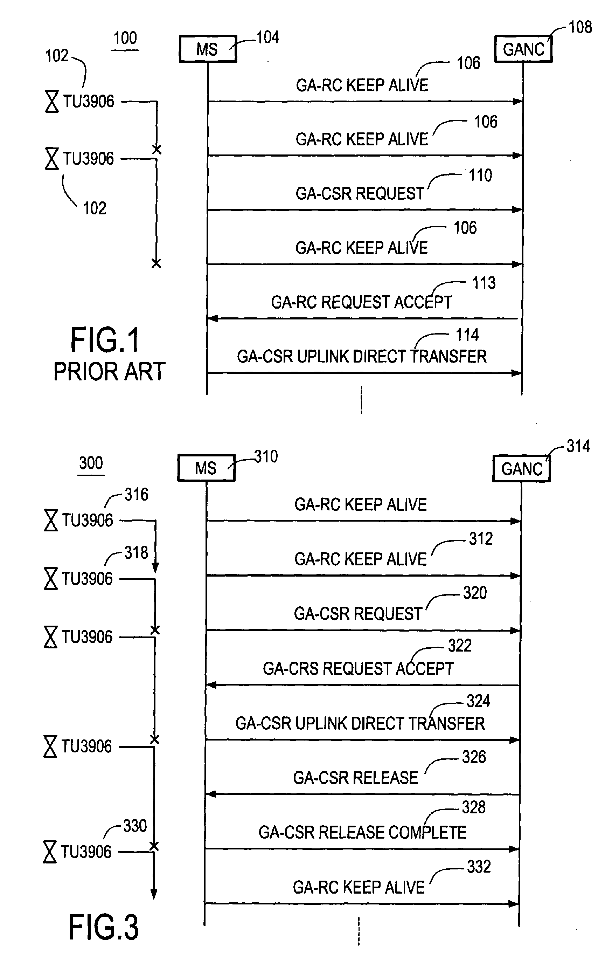

In paragraph 6.5 of the GAN Specification, when the mobile station (MS) receives a Generic Access Resource Control (GA-RC) Register Accept message, the MS initiates the GA-RC keep-alive mechanism by starting a TU3906 timer using a TU3906 time value received in the message. In Prior art process 100 of FIG. 1, when the TU3906 timer 102 expires in the MS 104, the MS sends the GA-RC keep-alive message 106 to the GANC 108 and re-starts the TU3906 timer 102.

A consequence of the GAN specification is that upon receipt of the GA-RC Register Accept message, the MS sends a GA-RC Keep-Alive message upon every expiry of the TU3906 timer, without regard for other procedures that may be performed by the MS. For example, if the TU3906 timer expires while the MS is handling a signalling procedure on UMA, the MS continues to send keep-alive messages during signalling, which is inefficient. In prior art FIG. 1, the MS continues to send keep-alive messages 106 during a Generic Access Circuit Switched Resources (GA-CSR) procedure. During the GA-CSR procedure, the MS sends a GA-CSR Request 110, receives a GA-CSR Request Accept 112, and then sends a GA-CSR Uplink Direct Transfer.

In FIG. 1, the MS sends a GA-RC keep-alive Request 106 upon expiration of the TU3906 timer during an ongoing GA-CSR procedure. Sending keep-alive messages during the ongoing GA-CSR signalling procedure however is useless. The network does not need to receive keep-alive messages during an ongoing procedure to determine that a mobile is still active. Moreover, continually sending keep-alive messages during signalling may delay the signalling and is a poor utilization of network resources. The unnecessary transmission of keep-alive messages also unnecessarily increases power drain, which has an adverse affect on battery-operated devices.

The various aspects, features and advantages of the disclosure will become more fully apparent to those having ordinary skill in the art upon careful consideration of the following Detailed Description and the accompanying drawings described below. The drawings may have been simplified for clarity and are not necessarily drawn to scale.

### BRIEF DESCRIPTION OF THE DRAWINGS

FIG. 1 is a prior art signaling diagram.
FIG. 2 is a wireless communication device.
FIG. 3 is a signaling diagram according to an exemplary embodiment of the disclosure.

### DETAILED DESCRIPTION

In FIG. 1, a wireless communication terminal 200 generally comprises a wireless transceiver 210 communicably coupled to a controller 220. The transceiver includes an Unlicensed Mobile Access (UMA) and/or General Access Network (GAN) transceiver or some other protocol transceiver 212. In some embodiments, the transceiver also includes a cellular transceiver, for example, a GSM, or UMTS or CDMA, other existing or future cellular protocol transceiver 214 capable of communicating on a cellular communications network. In one embodiment, the terminal is implemented as a mobile communications handset, for example, a cellular telephone, personal digital assistant (PDA), or other mobile station (MS) or terminal. The MS may also be implemented as a personal computer including a removable GAN and/or UMA wireless access card or equivalent circuitry.

The controller may comprise a central processing unit (CPU) and/or a digital signal processor (DSP). The controller is communicably coupled to user inputs 230, for example, a keypad or other alphanumeric input devices, a microphone, and other inputs suitable for use with such terminals as is well known by those having ordinary skill in the art. The controller is also coupled to user outputs 240, for example, a display, and an audio output among others. In other embodiments, the inputs and outputs may include other user interfaces.

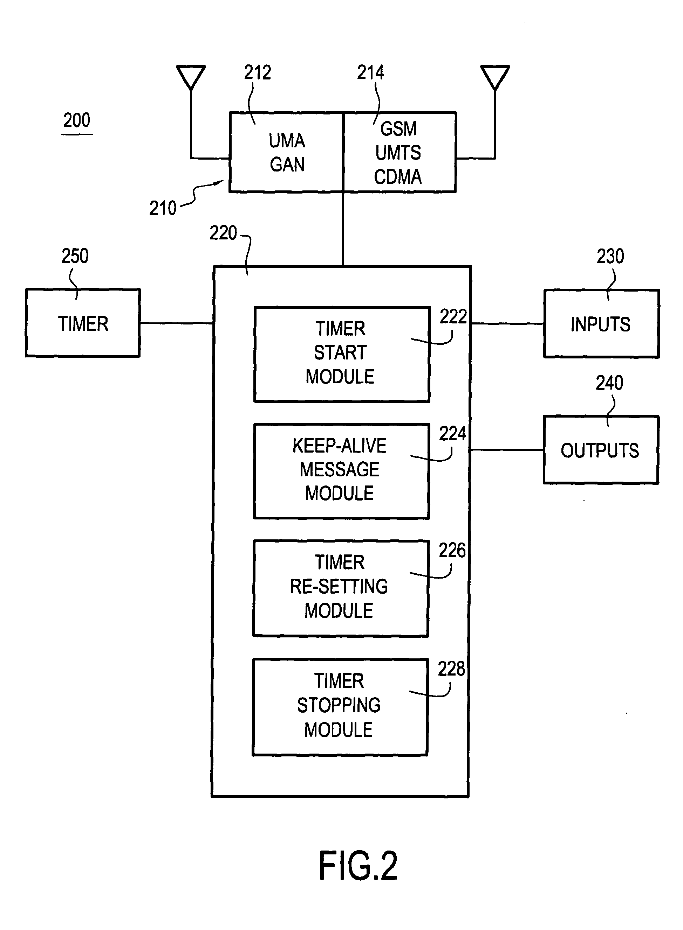

In FIG. 2, the terminal 200 includes a keep-alive timer 250 that is used to prompt the terminal when to transmit keep-alive messages to the GAN and/or UMA network. While the timer is illustrated as a separate entity, it is typically integrated with the controller and may be implemented in software. Generally, the terminal sends a keep-alive message when the timer expires. When the terminal disconnects from the network, the network stops receiving periodic keep-alive messages whereupon the network can release network resources previously allocated to the terminal. The keep-alive messages from the terminal maintain TCP socket flow when no data is flowing. In one embodiment, the timer is a TU 3906 timer in a wireless GAN implementation.

Generally, the keep-alive mechanism is used only when necessary, thereby avoiding unnecessary signaling and reducing current drain in the mobile terminal. Keep-alive messages may be sent only after idle periods on the TCP link instead of sending a keep-alive message at every expiry of the timer when registered on the network. Alternatively, the timer may be stopped and restarted each time the MS sends a message, for example, a Generic Access Circuit Switched Resource (GA-CSR) or a Generic Access Packet Switched Resource (GA-PSR) message, on the TCP socket. This way, the keep-alive message will always be sent after an idle period of TU3906 on the uplink side of the TCP link.

In FIG. 2, the controller 220 includes a timer starting module 222 that starts the keep-alive timer 250. In one embodiment, the keep-alive timer starts when the terminal connects to or registers with the network. In GAN, for example, when the terminal receives a Generic Access Resource Control (GA-RC) Register Accept message, the terminal initiates the TU3906 timer using a TU3906 time value received in the GA-RC message. The timer value may be hard coded or it may be variable and set based on instructions from the network. Alternatively, the terminal may set the timer value.

Generally when the timer expires, the terminal sends the network a keep-alive message and the timer is re-set. In FIG. 2, the controller includes a keep-alive message module 224 that causes the wireless transceiver to transmit a keep-alive message only when the keep-alive timer expires. The keep-alive message module may be implemented most expeditiously in software, although an equivalent hardware implementation may be made alternatively.

In the process flow diagram 300 of FIG. 3, in the GAN example discussed above, the MS 310 sends a "GA-RC Keep-Alive Message" 312 to the GAN controller (GANC) 314 upon expiration of the TU3906 timer 316. The TU3906 timer is generally re-started upon its expiration whereupon the terminal transmits another keep-alive message upon expiration of the timer.

In FIG. 2, the controller 220 also includes a timer re-setting module 226 that resets the keep-alive timer upon transmission of certain messages from the wireless transceiver. In one embodiment, the timer re-setting module restarts or resets the keep-alive timer upon transmission of a message on a Transmission Control Protocol (TCP) socket before the timer expires. In another embodiment, the timer re-setting module resets the keep-alive timer upon transmission of any general access network signaling message before expiration of the timer. Some examples of messages that prompt resetting the keep-alive timer include, but are not limited to, packet switched resource (PSR) messages, circuit switched resource (CSR) messages, radio control (RC) messages, among other messages. In another embodiment, the keep-alive timer is not reset upon the transmission of message on the User Datagram Protocol (UDP) link.

In FIG. 3, before expiration of TU3906 timer 318, the MS 310 sends a GA-CSR Request message 320 to the GAN controller (GANC) 314 and resets the TU3906 timer. The GANC 314 replies to the GA-CSR Request with a GA-CSR Accept message 322. Thereafter, the MS sends a GA-CSR Uplink Direct Transfer 324 and again resets the TU3906 timer. After the transfer, the GANC 314 sends a GA-CSR Release message 326. The MS 310 then sends a GA-CSR Release Complete message 328. When TU3906 timer 330 expires, the MS sends a keep-alive message 332.

In another embodiment, in illustrated in FIG. 2, the controller includes a timer stopping module 228 that stops the keep-alive timer upon sending or receiving a de-registration message, for example, a Generic Access Resource Control deregister message, before expiration of the timer.

While the present disclosure and the best modes thereof have been described in a manner establishing possession and enabling those of ordinary skill to make and use the same, it will be understood and appreciated that there are equivalents to the exemplary embodiments disclosed herein and that modifications and variations may be made thereto without departing from the scope and spirit of the inventions, which are to be limited not by the exemplary embodiments but by the appended claims.

## Claims

1. A method in a wireless communication user terminal (200) that sends a keep-alive message upon expiration of a keep-alive timer, the method comprising:
starting the timer;
re-setting (314) the timer upon transmission of a message (320) before expiration of the timer (318);
transmitting a keep-alive message (332) only upon expiration of the timer (330).

2. The method of Claim 1 comprising :
- receiving a registration accept message with a timer value;
- starting the timer using the timer value received in the registration accept message.

3. The method of Claim 1, the timer is a TU 3906 timer, comprising
- receiving a Generic Access Resource Control message with a TU3906 timer value;
- starting the TU3906 timer using the TU3906 timer value received in the generic access resource control message.

4. The method of Claim 1, comprising stopping the timer upon sending or receiving a generic access resource control deregister message before expiration of the timer.

5. The method of Claim 1, comprising re-starting the timer upon expiration of the timer.

6. The method of Claim 1, comprising re-setting the timer upon transmission any general access network signaling message sent on a Transmission Control Protocol socket before expiration of the timer.

7. A wireless communication terminal (200) comprising:
a wireless transceiver (210);
a keep-alive timer (250);
a controller (220) communicably coupled to the wireless receiver (210) and the keep-alive timer (250);
the controller (220) including a timer starting module (222) that starts the keep-alive timer (250);
the controller including a timer re-setting module (226) that resets the keep-alive timer (250) upon transmission of a message from the wireless transceiver, and
a keep-alive message module (224) that causes the wireless transceiver (210) to transmit a keep-alive message only when the keep-alive timer (250) expires.

8. The terminal of Claim 7, **characterized in that** the timer (250) is a TU 3906 timer, the timer starting module (222) starts keep-alive timer using a TU3906 timer value received in a generic access resource control message received by the wireless transceiver (210).

9. The terminal of Claim 7, **characterized in that** the controller (220) includes a timer stopping module (228) that stops the keep-alive timer (250) upon sending or receiving a generic access resource control deregister message before expiration of the timer.

10. The terminal of Claim 7, **characterized in that** the timer re-setting module (226) resets the keep-alive timer (250) upon expiration of the timer.

11. The terminal of Claim 7, **characterized in that** the timer re-setting module (226) resets the keep-alive timer (250) upon transmission of any general access network signaling message before expiration of the timer.

12. The terminal of Claim 7, **characterized in that** the timer re-setting module (226) resets the keep-alive timer (250) upon transmission of a message on a Transmission Control Protocol socket.

13. The terminal of Claim 7, **characterized in that** it is a mobile communications handset.

14. The terminal of Claim 7, **characterized in that** the keep-alive timer is implemented within the controller.
